# EUROPÄISCHE PATENTSCHRIFT

(11) **EP 0 483 404 B1**
(45) Veröffentlichungstag und Bekanntmachung des Hinweises auf die Patenterteilung: **20.07.1994**
(21) Anmeldenummer: 90120912.2
(22) Anmeldetag: 31.10.1990
(51) Int. Cl.: A47J 27/04, A47J 31/54, A47J 31/24, F22B 1/28

(54) **Maschine zum Bereiten von Heissgetränken**
Apparatus for preparing hot drinks
Appareil de préparation de boissons chaudes

(43) Veröffentlichungstag der Anmeldung: 06.05.1992
(73) Patentinhaber: WMF WÜRTTEMBERGISCHE METALLWARENFABRIK AG, 73304 Geislingen (DE)
(72) Erfinder: Burkhardtsmaier, Günter, W-7340 Geislingen/Steige (DE)
(74) Vertreter: Grünecker, Kinkeldey, Stockmair & Schwanhäusser Anwaltssozietät

(56) Entgegenhaltungen:
- EP-A- 0 302 125
- DE-A- 1 916 631
- DE-A- 3 512 370
- FR-A- 2 604 077

## Beschreibung

Die Erfindung bezieht sich auf eine Maschine zum Bereiten von Heißgetränken der im Oberbegriff von Anspruch 1 erläuterten Art.

Herkömmliche Kaffeemaschinen sind häufig mit einer Dampfausgabeleitung versehen, die nach Bedarf entweder zum Erwärmen eines Glases Wasser zur Bereitung von Tee oder zum Aufschäumen von Milch zur Bereitung von Cappuccino dient. Es sind weiterhin Milcherhitzer bekannt, mit denen Milch portionsweise durch das Einleiten von Dampf erhitzt wird. Zur Dampfbereitung werden entweder Dampfkessel oder Durchlauferhitzer verwendet. Dampfkessel müssen jedoch den äußerst strengen Sicherheitsvorschriften für Überdruckkessel genügen und sind deshalb relativ teuer. Durchlauferhitzer benötigen hingegen vergleichsweise hohe Stromanschlußwerte. Beiden Systemen gemeinsam ist das Problem der Verkalkung durch stark kalkhaltiges Leitungswasser. Sowohl der Dampfkessel als auch der Durchlauferhitzer müssen von Zeit Zu Zeit entkalkt werden, wozu die gesamte Maschine stillgelegt und aüßerst umsichtig vorgegangen werden muß, damit Reste der aggressiven Entkalkungschemikalien nicht in Rohrleitungen und Maschinenteilen verbleiben.

In der nicht vorveröffentlichten EP-A-0 395 843 (= Anmeldung 90 102 888) ist bereits eine Maschine Zum Bereiten von Heißgetränken beschrieben, die eine Einspritzeinrichtung zum Einspritzen von Wasser gegen einen in einer Dampfkammer angeordneten Wärmespeicher enthält. Die dort verwendete Düse wird durch den Wasserdruck in die Einspritzstellung verschoben und wird durch Federwirkung aus der Einspritzstellung zurückgezogen, wenn der Wasserdruck nachläßt. Die Düse selbst ist so ausgebildet, daß sie einen keglig auseinanderlaufenden Strahl fein verteilter Wassertröpfchen direkt auf den Wärmespeicher sprüht. Zwar ist die vorbeschriebene Maschine zur Bereitung von Dampf recht brauchbar, es ergeben sich jedoch immer noch Probleme an der Düse bei kalkhaltigem Leitungswasser. Auch ist der Wirkungsgrad noch verbesserungsfähig.

Der Erfindung liegt somit die Aufgabe zugrunde, eine Maschine zum Bereiten von Heißgetränken bereitzustellen, die einfach in der Konstruktion und wartungsfreundlich ist, und die einen relativ geringen Leistungsbedarf aufweist.

Die Aufgabe wird durch die kennzeichnenden Merkmale des Hauptanspruchs gelöst.

Mit der erfindungsgemäßen Maschine kann die gewünschte Menge Dampf mit einem relativ geringen Leistungseinsatz erzeugt werden. Da bei jedem Kontakt der Wandung des Wärmespeichers mit Kaltwasser dem Wärmespeicher kurzzeitig Energie entzogen wird, bevor er sich wieder auf die benötigte Temperatur aufheizt, sind die Kalkablagerungen auf dem Wärmespeicher einer laufenden Temperaturwechselbeanspruchung ausgesetzt, die zum Abplatzen der Kalkschicht führt. Der erfindungsgemäße Dampferzeuger muß somit nicht chemisch entkalkt werden. Die Dampfkammer muß keine Überdruckkammer sein, so daß die für Dampfkessel notwendigen Sicherheitsvorkehrungen nicht erforderlich sind. Durch die Verwendung einer Glattstrahldüse können vom Wasserstrahl relativ große Entfernungen zurückgelegt werden, so daß die Düse in ausreichender Entfernung von der Dampfkammer und vom Wärmespeicher angeordnet werden kann. Die Feinzerstäubung des Glattstrahles wird dann durch die Prallfläche erreicht.

Durch die gemaß Anspruch 2 zwischen der Glattstrahldüse und der Dampfkammer angeordnete Wand und die dem Durchmesser des Glattstrahls angepaßte Wasserleitbohrung kann die Glattstrahldüse noch besser vom Wärmespeicher und von den in der Dampfkammer herrschenden Temperaturen isoliert bzw. gegen Wärmestrahlung geschützt werden.

Durch die Maßnahme nach Anspruch 3 wird der Wirkungsgrad der Dampferzeugung weiter erhöht.

Von einer gemäß Anspruch 4 senkrecht nach unten gerichteten Glattstrahldüse kann Restwasser problemlos abtropfen, so daß die Gefahr von Kalkablagerungen durch verdunstendes Wasser noch weiter herabgesetzt wird.

Die in Anspruch 5 angegebene Anordnung und Ausgestaltung der Prallfläche verbessert das Verteilen des Wassers über die Fläche des Wärmetauschers.

Durch die Ausgestaltung nach Anspruch 6 wird ein Zurücksaugen des aufzuheizenden Getränks in die Dampfkammer nach dem Ende der Dampferzeugung verhindert.

Anspruch 7 beschreibt eine besonders zweckmäßige Anordnung und Ausgestaltung des Entlüftungsventils.

Die in Anspruch 8 angegebene Konstruktion bewirkt auf einfache Weise, daß der Dampf nacherhitzt werden kann.

Durch die Ausgestaltung nach Anspruch 9 kann der im Dampferzeuger anfallende Kalk auf einfache Weise entfernt werden.

Anspruch 10 beschreibt eine besonders zweckmäßige Anordnung und Ausgestaltung des Wärmespeichers.

Ein Ausführungsbeispiel der Erfindung wird nachfolgend anhand der Zeichnungen näher erläutert. Es zeigen:
**Figur 1** eine schematische Darstellung der wichtigsten Bauteile einer erfindungsgemäß ausgerüsteten Kaffeemaschine, und
**Figur 2** eine vergrößerte Darstellung eines erfindungsgemäßen Dampferzeugers im Längsschnitt.

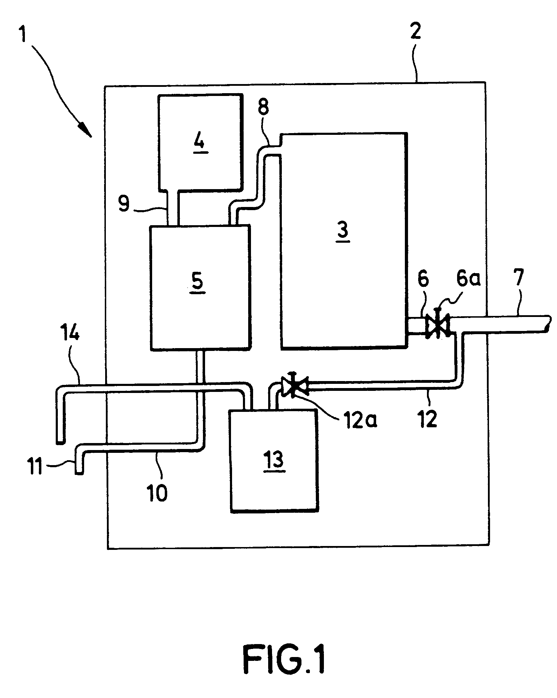

Aus Figur 1 ist in schematischer Darstellung eine Kaffeemaschine 1 mit Dampferzeugung ersichtlich, die in üblicher Weise einen innerhalb eines Gehäuses 2 angeordneten Heißwasserbereiter 3, einen Kaffeemehlbehälter 4 und eine Brüheinheit 5 enthält. Der Heißwasserbereiter 3 ist als Boiler ausgebildet und steht über eine Zufuhrleitung 6 mit einem Absperrventil 6a mit einer Kaltwasserleitung 7 in Verbindung. Zwischen dem Heißwasserbereiter 3 und der Brüheinheit 5 ist eine Heißwasserleitung 8 vorgesehen. Der Kaffeemehlbehälter 4 steht mit der Brüheinheit 5 über einen Kaffeemehl-Einfüllstutzen 9 in Verbindung. Der in der Brüheinheit 5 gebrühte Kaffee läuft über eine Kaffeeausgabeleitung 10 ab und gelangt über einen gegebenenfalls absperrbaren und außerhalb der Maschine angeordneten Auslauf 11 in ein daruntergestelltes, nicht gezeichnetes Gefäß.

Die Kaltwasserleitung 7 ist vor dem Ventil 6a mit einer Zufuhrleitung 12 verbunden, die ebenfalls ein Absperrventil 12a enthält. Die Zufuhrleitung 12 mündet in einen Dampferzeuger 13, von dem eine Dampfausgabeleitung 14 nach außerhalb der Maschine 1 zum Einleiten von Dampf in ein flüssigkeitsgefülltes Gefäß wegführt.

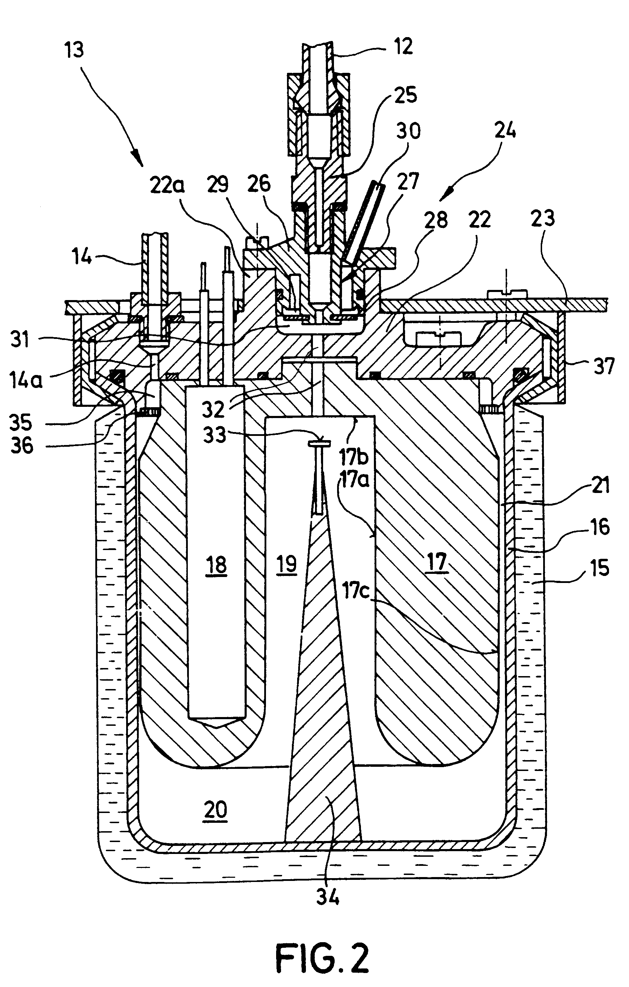

Wie in Figur 2 näher dargestellt, enthält der Dampferzeuger 13 ein becherförmiges, nach außen durch eine Isolierung 15 abgedecktes Gefäß 16. Im Inneren des Gefäßes 16 ist ein dickwandiger Wärmespeicher 17 aus gut wärmeleitendem Material, beispielsweise Aluminium, angeordnet. Der Wärmespeicher 17 ist ebenfalls becherförmig ausgebildet und derart im Gehäuse 16 angeordnet, daß die offene Seite des becherförmigen Wärmespeichers 17 zum Boden des Gehäuses 16 weist. In der dicken Wandung des Wärmespeichers 17 ist wenigstens eine thermostatgeregelte Heizpatrone 18 untergebracht, die den Wärmespeicher 17 auf einer Temperatur zwischen etwa 150 bis 250°C hält.

Das Innere des becherförmigen Wärmespeichers 17 ist als Dampfkammer 19 ausgebildet, die von der zylindrischen Innenfläche 17a des Wärmespeichers 17 und der nach innen weisenden Bodenfläche 17b begrenzt wird.

Sowohl die axiale Längserstreckung als auch der äußere Durchmesser des Wärmespeichers 17 ist kleiner als die entsprechenden Abmessungen des Gefäßes 16, so daß zwischen der offenen Seite des becherförmigen Wärmespeichers 17 und dem Boden des Gefäßes 16 ein Sammelraum 20, und zwischen der äußeren, zylindrischen Umfangsfläche 17c des Wärmespeichers 17 und der zylindrischen Wandung des Gefäßes 16 ein ringförmiger Spalt 21 verbleibt.

Der Wärmespeicher 17 ist mit seinem Boden an einem Deckel 22 aus wärmeisolierendem Material, bevorzugt Kunststoff, festgeschraubt. Der Deckel 22 ist seinerseits an der Unterseite einer Konsole 23 angeschraubt, die mit dem Gehäuse 2 der Maschine 1 fest verbunden ist. Die Konsole 23 ist aus wärmeleitendem Material, so daß aufsteigende Wärme schnell abgeleitet wird.

Der Dampferzeuger 13 enthält weiterhin eine Einspritzeinrichtung 24 zum Einspritzen von Wasser in die Dampfkammer 19. Die Einspritzeinrichtung 24 enthält eine oberhalb der Dampfkammer angeordnete, im wesentlichen senkrecht nach unten wirkende, lange und schmale Glattstrahldüse 25, die mit der Zufuhrleitung 12 zum Zuführen von Wasser verbunden ist. Die Glattstrahldüse 25 ist in einen Sockel 26 aus Kunststoff eingeschraubt, der auf einem sich nach oben erstreckenden, eine Öffnung in der Konsole 23 durchsetzenden und die Düse 25 gegenüber der Konsole 23 isolierenden Flansch 22a des Deckels 22 aufliegt und auf ihm befestigt ist. Im Sockel 26 ist ein Entlüftungsventil 27 vorgesehen, das einen am Sockel 26 befestigten Ventilteller 28 aus einem biegbaren, hitzebeständigen Material, beispielsweise einem Kunststoff, aufweist, der normalerweise von seinem ebenfalls am Sockel 26 angeordneten Ventilsitz 29 abgehoben ist, so daß der Durchgang zu einer den Sockel 26 durchsetzenden Entlüftungsleitung 30 frei ist.

Unterhalb des Ventiltellers 28, zwischen Ventilteller 28 und dem Deckel 22, ist ein Druckraum 31 vorgesehen, durch den sich der Druck gleichmäßig auf die gesamte Oberfläche des Ventiltellers 28 verteilen kann.

Die Einspritzeinrichtung 24 enthält weiterhin eine koaxial mit der Glattstrahldüse 25 angeordnete Wasserleitbohrung 32, die eine Verbindung zwischen der Glattstrahldüse und der Dampfkammer 19 schafft und sich durch den Sockel 26, das Ventil 27, den Deckel 22 und den Boden des Wärmespeichers 17 erstreckt. Die Wasserleitbohrung 32 mündet an der Bodenfläche 17b des Wärmespeichers im wesentlichen koaxial zu seiner inneren, zylindrischen Wandung 17a.

Knapp unterhalb der Mündung der Wasserleitbohrung 32 ist in der Dampfkammer 19 eine sich im wesentlichen im Winkel von 90° zur Achse der Wasserleitbohrung 32 erstreckende Prallfläche 33 angeordnet. Die Prallfläche 33 befindet sich an der Oberseite eines Prallbleches, das auf der Spitze einer kegelförmigen Stütze 34 aus wärmeleitendem und -speicherndem Material, wie Aluminium oder dergleichen, befestigt ist. Die Stütze 34 ist am Boden des Gefäßes 16 befestigt und ragt koaxial in die Dampfkammer 19 hinein.

Ebenfalls von oben her mündet die Dampfausgabeleitung 14 durch eine Öffnung in der Konsole 23 und ohne wärmeleitende Verbindung mit ihr in den Dampferzeuger 13. In Verlängerung der Dampfausgabeleitung 14 ist im Deckel 22 eine Auslaßöffnung 14a vorgesehen, die mit dem ringförmigen Spalt 21 zwischen dem Wärmespeicher 17 und der Wandung des Gefäßes 16 über einen im Deckel 22 ausgebildeten Ringraum 35 in Verbindung steht. Der Ringraum 35 und der ringförmige Spalt 21 sind durch ein Sieb 36 voneinander getrennt.

Das Gefäß 16 ist über einen Schnellverschluß, beispielweise dem dargestellten Spannbügel 37 mit dem Deckel 22 und somit der Konsole 23 befestigt. Nach dem Lösen des Schnellverschlusses 37 kann das Gefäß 16 nach unten vom Wärmespeicher 17 abgezogen werden.

Soll Dampf erzeugt werden, so wird durch das Öffnen des Ventils 12a der Glattrohrdüse 25 Wasser zugeführt. Die feine, lange Düse erzeugt einen glatten Wasserstrahl, der unter dem Druck von mindestens 2 bar durch die Wasserleitbohrung 32 tritt. Der Durchmesser der Wasserleitbohrung ist zumindest über einen Teil ihrer Länge nicht viel größer als der Durchmesser des zu erwartenden Wasserstrahls, so daß die Querschnittsfläche der Verbindung zwischen der Glattstrahldüse 25 und der Dampfkammer 19, insbesondere in dem im Deckel 22 liegenden Teil, zum Verhindern größerer Wärmestrahlung zur Glattstrahldüse 25 so klein wie möglich gehalten wird. Kurz nach dem Eintritt in die Dampfkammer 19 trifft der Glattstrahl auf die Prallfläche 33 und wird in feine Tröpfchen gegen die Flächen, insbesondere die Umfangsfläche 17a des Wärmespeichers 17 geschleudert. Die Tröpfchen verdampfen und erhöhen den Druck innerhalb der Dampfkammer 19. Sowie sich der Druck durch die Wasserleitbohrung auch in Richtung auf die Glattstrahldüse 25 ausbreitet, wird der Ventilteller 28 des Entlüftungsventils 27 gegen seinen Ventilsitz 29 gedrückt und schließt die Entlüftungsleitung 30.

Der sich mehr und mehr bildende Dampf strömt die Dampfkammer 19 abwärts, entlang der zylindrischen, inneren Umfangswandung und heizt sich weiter auf. Der Dampf passiert den Sammelraum 20 und strömt im ringförmigen Spalt 21 wieder nach oben, wobei er sich an der äußeren zylindrischen Umfangswandung 17c weiter erhitzt bzw. überhitzt. Er durchströmt das Sieb, gelangt in den Ringraum 35 und strömt über die Dampfausgabeleitung 14 aus der Maschine 1. Soll die Dampfausgabe beendet werden, wird das Ventil 12a geschlossen und die Wasserzufuhr gestoppt. Nach Beendigung der Dampfbildung entspannt sich der Druck in der Dampfkammer 19, so daß sich der Ventilteller 28 unter der Wirkung seiner Materialelastizität vom Ventilsitz 29 abheben kann und die Verbindung zur Entlüftungsleitung 30 wieder frei ist. Auf diese Weise wird ein Unterdruck in der Dampfkammer 19 verhindert, durch den die zu erwärmende Flüssigkeit in die Dampfkammer 19 gesaugt werden könnte.

Von der senkrecht angeordneten Glattstrahldüse 25 kann Restwasser leicht abtropfen. Darüberhinaus wird die Glattstrahldüse 25 relativ kühl gehalten, was insbesondere durch den großen Abstand zur Dampfkammer 19 bzw. zum Wärmespeicher 17, die zwischen der Glattstrahldüse 25 und der Dampfkammer 19 angeordneten Isolationsmaterialien des Deckels 22 und des Sockels 26 und/oder durch die als konvektionshemmende Wände wirkenden Teile des Deckels 22, aber auch des Wärmespeichers 17, erreicht wird. Auf diese Weise kann die Glattstrahldüse 25 im wesentlichen frei von Kalkablagerungen gehalten werden.

Der sich beim Verdampfen an den Wänden 17a, 17b, 17c ablagernde Kalk platzt durch die Temperaturwechselbeanspruchung dieser Wände größtenteils wieder ab und sammelt sich zusammen mit dem ausgefällten Kalk im Sammelraum 20 am Boden des Gefäßes 16. Das Sieb 36 verhindert, daß Kalkpartikel vom Dampfstrom mit in die Dampfausgabeleitung 14 gerissen werden. Von Zeit zu Zeit wird der Schnellverschluß 37 gelöst, das Gefäß 16 vom Wärmespeicher 17 abgezogen und der angesammelte Kalk entfernt.

In Abwandlung des beschriebenen und gezeichneten Ausführungsbeispieles kann der erfindungsgemäße Dampferzeuger beispielsweise auch bei einfachen Milcherhitzungsgeräten verwendet werden. Das eingespritzte Wasser kann, wie gezeichnet, aus einer Kaltwasserzuführung zur Maschine oder aus einer anderen Quelle stammen. Die Verwendung bereits vorgewärmten Wassers, z. B. aus dem Boiler 3, ist ebenfalls möglich. Die Prallfläche kann beheizt und/oder unter einem von 90° abweichenden Winkel zur Glattstrahldüse angeordnet werden. Das Entlüftungsventil kann direkt in die Dampfkammer oder in irdendeinen anderen Teil des Dampferzeugers münden. Auch die Form des Gefäßes, die Form des Wärmespeichers und die Form der Prallblechstütze bzw. die Befestigung des Prallbleches kann abgewandelt werden.

## Patentansprüche

1. Maschine (1) zum Bereiten von Heißgetränken, wie Kaffee, Tee oder Milch, mit einem Dampferzeuger (13) und einer Dampfausgabeleitung (14), **dadurch gekennzeichnet**, daß der Dampferzeuger (13) eine mit der Dampfausgabeleitung (14) verbundene Dampfkammer (19) mit einem beheizbaren Wärmespeicher (17) und einer Einspritzeinrichtung (24) zum Einspritzen von Wasser in die Dampfkammer (19) enthält, wobei die Einspritzeinrichtung (24) eine im Abstand zur Dampfkammer (19) angeordnete Glattstrahldüse (25) und eine in der Dampfkammer (19) angeordnete Prallfläche (33) aufweist.

2. Maschine nach Anspruch 1, **dadurch gekennzeichnet**, daß zwischen der Glattstrahldüse (25) und der Dampfkammer (19) eine, vorzugsweise wärmeisolierende Wand (22) angeordnet ist, die von einer Wasserleitbohrung (32) durchsetzt ist, deren Durchmesser dem Durchmesser des Glattstrahls angepaßt ist.

3. Maschine nach Anspruch 1 oder 2, **dadurch gekennzeichnet**, daß die Dampfkammer (19) in einem Hohlraum im Inneren des Wärmespeichers (17) angeordnet ist, und daß an der Außenseite (17c) des Wärmespeichers (17) ein Strömungsraum (21) zum weiteren Erhitzen des Dampfes vorgesehen ist, der mit der Dampfkammer (19) und der Dampfausgabeleitung (14) verbunden ist.

4. Maschine nach einem der Ansprüche 1 bis 3, **dadurch gekennzeichnet**, daß die Glattstrahldüse (25) im wesentlichen senkrecht nach unten gerichtet ist.

5. Maschine nach einem der Ansprüche 1 bis 4, **dadurch** **gekennzeichnet**, daß die Prallfläche (33) im wesentlichen rechtwinklig zum Glattstrahl und zu zumindest einer Fläche (17a) des Wärmetauschers (17) verläuft.

6. Maschine nach einem der Ansprüche 1 bis 5, **dadurch gekennzeichnet**, daß die Dampfkammer (19) ein Entlüftungsventil (27) aufweist.

7. Maschine nach Anspruch 6, **dadurch gekennzeichnet**, daß das Entlüftungsventil (27) ein zwischen der Glattstrahldüse (25) und der Dampfkammer (19) in einem Druckraum (31) angeordnetes, normalerweise von einem Ventilsitz (29) abgehobenes Ventilteil (28) aufweist, das vom Dampfdruck während der Dampferzeugung auf den Ventilsitz (29) gedrückt wird.

8. Maschine nach einem der Ansprüche 3 bis 7, **dadurch gekennzeichnet**, daß der Wärmespeicher (17) in einem Gehäuse (16) untergebracht ist, wobei der Strömungsraum (21) als ringförmiger Spalt zwischen der Außenseite (17c) des Wärmespeichers (17) und dem Gehäuse (16) ausgebildet ist.

9. Maschine nach Anspruch 8, **dadurch gekennzeichnet**, daß das Gehäuse (16) einen Kalksammelraum (20) enthält und lösbar an einem Maschinenteil (23) befestigt ist.

10. Maschine nach Anspruch 9, **dadurch gekennzeichnet**, daß der Wärmespeicher (17) rohrförmig ausgebildet und in Axialrichtung senkrecht angeordnet ist, und daß der Kalksammelraum (20) unterhalb des Wärmespeichers (17) zwischen diesem und dem Boden des Gehäuses (16) vorgesehen ist.

## Claims

1. Machine (1) for making hot beverages such as coffee, tea or milk, with a steam generator (13) and a steam discharge pipe (14), characterised in that the steam generator (13) contains a steam chamber (19) connected to the steam discharge pipe (14), with a heatable heat reservoir (17) and an injection device (24) for injecting water into the steam chamber (19), wherein the injection device (24) comprises a smooth jet nozzle (25) arranged at a distance from the steam chamber (19) and a baffle surface (33) arranged in the steam chamber (19).

2. Machine according to claim 1, characterised in that between the smooth jet nozzle (25) and the steam chamber (19) is arranged a preferably heat-insulating wall (22) through which extends a water conducting bore (32) of which the diameter is adapted to the diameter of the smooth jet.

3. Machine according to claim 1 or 2, characterised in that the steam chamber (19) is arranged in a cavity inside the heat reservoir (17), and in that on the outside (17c) of the heat reservoir (17) is provided a flow chamber (21) for further heating the steam which is connected to the steam chamber (19) and the steam discharge pipe (14).

4. Machine according to any of claims 1 to 3, characterised in that the smooth jet nozzle (25) is directed essentially vertically downwards.

5. Machine according to any of claims 1 to 4, characterised in that the baffle surface (33) extends essentially at right angles to the smooth jet and to at least one surface (17a) of the heat exchanger (17).

6. Machine according to any of claims 1 to 5, characterised in that the steam chamber (19) comprises an air escape valve (27).

7. Machine according to claim 6, characterised in that the air escape valve (27) comprises a valve portion (28) which is arranged between the smooth jet nozzle (25) and the steam chamber (19) in a pressure chamber (31) and is normally lifted off a valve seat (29) and which is pressed onto the valve seat (29) by the steam pressure during steam generation.

8. Machine according to any of claims 3 to 7, characterised in that the heat reservoir (17) is accommodated in a housing (16), wherein the flow chamber (21) is constructed as an annular gap between the outside (17c) of the heat reservoir (17) and the housing (16).

9. Machine according to claim 8, characterised in that the housing (16) contains a lime collecting chamber (20) and is releasably attached to a machine part (23).

10. Machine according to claim 9, characterised in that the heat reservoir (17) is of tubular construction and arranged vertically in the axial direction, and in that the lime collecting chamber (20) is provided below the heat reservoir (17) between the latter and the bottom of the housing (16).

## Revendications

1. Machine (1) pour la préparation de boissons chaudes, telles que du café, du thé ou du lait, avec un générateur de vapeur (13) et d'une conduite de sortie de vapeur (14), caractérisée en ce que le générateur de vapeur (13) contient une chambre de vapeur (19), reliée à la conduite de sortie de vapeur (14), avec un accumulateur de chaleur (17) susceptible d'être chauffé et un dispositif d'injection (24), pour injecter de l'eau dans la chambre de vapeur (19), le dispositif d'injection (24) présentant une buse de jet lisse (25), ménagée à distance de la chambre de vapeur (19), et une surface d'impact (33), disposée dans la chambre de vapeur (19).

2. Machine selon la revendication 1, caractérisée en ce qu'une paroi (22), de préférence isolante de la chaleur, est disposée entre la buse de jet lisse (25) et la chambre de vapeur (19), paroi traversée par un perçage de conduite d'eau (32) dont le diamètre est adapté au diamètre du jet lisse.

3. Machine selon la revendication 1 ou 2, caractérisée en ce que la chambre de vapeur (19) est disposée dans un espace creux à l'intérieur de l'accumulateur de chaleur (17), et qu'un espace d'écoulement (21), servant à chauffer encore la vapeur, est prévu sur le côté extérieur (17c) de l'accumulateur de chaleur (17) et relié à la chambre de vapeur (19) et à la conduite de sortie de vapeur (14).

4. Machine selon l'une des revendications 1 à 3, caractérisée en ce que la buse de jet lisse (25) est dirigée sensiblement verticalement, vers le bas.

5. Machine selon l'une des revendications 1 à 4, caractérisée en ce que la surface d'impact (33) s'étend sensiblement à angle droit par rapport au jet lisse et par rapport à au moins une surface (17a) de l'échangeur de chaleur (17).

6. Machine selon l'une des revendications 1 à 5, caractérisée en ce que la chambre de vapeur (19) présente une soupape d'évacuation (27).

7. Machine selon la revendication 6, caractérisée en ce que la soupape d'évacuation (27) présente une partie de soupape (28), normalement levée par rapport à un siège de soupape (29), disposée dans un espace de pression (31) entre la buse de jet lisse (25) et la chambre de vapeur (19), partie de soupape qui, pendant la production de vapeur, est pressée contre le siège de soupape (29), par la pression de vapeur.

8. Machine selon l'une des revendications 3 à 7, caractérisée en ce que l'accumulateur de chaleur (17) est logé dans un boîtier (16), l'espace d'écoulement (21) étant réalisé en forme de fente annulaire, entre le côté extérieur (17c) de l'accumulateur de chaleur (17) et le boîtier (16).

9. Machine selon la revendication 8, caractérisée en ce que le boîtier (16) contient un espace d'accumulation de calcaire (20) et est fixé amovible à une pièce de machine (23).

10. Machine selon la revendication 9, caractérisée en ce que l'accumulateur de chaleur (17) est réalisé sous forme tubulaire et est disposé verticalement dans la direction axiale, et que l'espace d'accumulation de calcaire (20) est prévu au dessous de l'accumulateur de chaleur (17), entre celui-ci et le fond du boîtier (16).
